# EUROPEAN PATENT APPLICATION

(11) **EP 2 724 879 A1**
(43) Date of publication of application: **30.04.2014**
(21) Application number: 11868129.5
(22) Date of filing: 23.06.2011
(51) Int. Cl.: B60H 1/08, F28F 9/02, H02K 9/19

(54) **VEHICLE**

(71) Applicant: Toyota Jidosha Kabushiki Kaisha, Toyota-shi, Aichi 471-8571 (JP)
(72) Inventor: ARAI, Kunihiko, Toyota-shi Aichi 471-8571 (JP)
(74) Representative: TBK
(86) International application number: PCT/JP2011/064439
(87) International publication number: WO 2012/176310

(57) **Abstract**

A vehicle includes a motor generator, and a heater core (50) for adjusting a temperature in a vehicle compartment by using operating oil supplied to the motor generator. The heater core (50) includes a tube (72) in a first region (90) that connects between an inlet portion (52) and an outlet portion (64) of the heater core (50), a tube (72) in a second region (92) that is provided in parallel with the tube (72) in the first region (90), and connects between the inlet portion (52) and the outlet portion (64) of the heater core (50), and a first adjusting valve (56) for shutting off, where a temperature of the operating oil is lower than a prescribed temperature range, flow of the operating oil in the tube (72) in the second region (92) by being changed to a closed position, and for adjusting an amount of flow of the operating oil in the tube (72) in the second region (92) in accordance with the temperature of the operating oil where the temperature of the operating oil is within the prescribed temperature range.

## Description

### TECHNICAL FIELD

The present invention relates to a technique for adjusting the temperature of a refrigerant to be supplied to a rotating electric machine for driving mounted on a vehicle.

### BACKGROUND ART

In a transmission of an electric vehicle including a rotating electric machine for driving, a refrigerant for the purpose of cooling and lubrication is allowed to flow using a pump or the like. Japanese Patent Laying-Open No. 05-122903 (PTD 1), for example, discloses a technique for changing an amount of circulating flow with respect to the amount of flow of a refrigerant for cooling a motor, by regulating a pumping means.

### CITATION LIST

### PATENT DOCUMENT

PTD 1: Japanese Patent Laying-Open No. 05-122903

### SUMMARY OF INVENTION

### TECHNICAL PROBLEM

There is, however, a drawback in that when the temperature of the refrigerant is high, the extent to which the temperature of the refrigerant can be reduced by adjusting the amount of flow is limited. Anther drawback is that when the rotating electric machine for driving is reduced in size, the absolute amount of the refrigerant within the transmission decreases, which causes the temperature of the refrigerant to easily change. An additional drawback is that when a structural component that utilizes heat of the refrigerant, such as a heater core, is provided in a vehicle, only a small amount of heat is generated if the load on the rotating electric machine for driving is small, and hence, the amount of heat required to increase the temperature of the refrigerant cannot be obtained. Moreover, since the refrigerant within the transmission has viscous temperature characteristics, it is necessary to rapidly increase the temperature of the refrigerant to a temperature range that corresponds to a low viscosity range where the loss due to stirring is low.

An object of the present invention is to provide a vehicle in which the temperature of a refrigerant to be supplied to a rotating electric machine for driving mounted on a vehicle is adjusted to an appropriate temperature.

### SOLUTION TO PROBLEM

A vehicle according to one aspect of this invention includes a rotating electric machine for driving, and a heater core for adjusting a temperature in a vehicle compartment by using a refrigerant supplied to the rotating electric machine for driving. The heater core includes a first medium passage connecting between an inlet portion and an outlet portion of the heater core, a second medium passage provided in parallel with the first medium passage, and connecting between the inlet portion and the outlet portion of the heater core, and a first adjusting valve for shutting off, where a refrigerant temperature is lower than a first-temperature range, flow of the refrigerant in the second medium passage by being changed to a closed position, and for adjusting an amount of flow of the refrigerant in the second medium passage in accordance with the refrigerant temperature where the refrigerant temperature is within the first-temperature range.

Preferably, the first adjusting valve permits the flow of the refrigerant in the second medium passage by being changed to an open position where the refrigerant temperature is above the first-temperature range.

Further preferably, the heater core further includes a third medium passage provided in parallel with each of the first medium passage and the second medium passage, and connecting between the inlet portion and the outlet portion of the heater core, and a second adjusting valve for shutting off, where the refrigerant temperature is lower than a second-temperature range, flow of the refrigerant in the third medium passage by being changed to the closed position, and for adjusting an amount of flow of the refrigerant in the third medium passage in accordance with the refrigerant temperature where the refrigerant temperature is within the second-temperature range. An upper limit value of the second-temperature range is in a range higher than an upper limit value of the first-temperature range.

Further preferably, the heater core further includes a third adjusting valve that adjusts the amount of flow of the refrigerant in the first medium passage in accordance with the refrigerant temperature where the refrigerant temperature is within the third-temperature range, and permits the flow of the refrigerant in the first medium passage by being changed to the open position where the refrigerant temperature is above the third-temperature range. A lower limit value of the third-temperature range is in a range lower in temperature than a lower limit value of the first-temperature range.

Further preferably, the vehicle further includes a detecting unit for detecting the refrigerant temperature flowing in the inlet portion of the heater core, and a control unit for controlling the first adjusting valve so that an amount of opening of the first adjusting valve increases as the refrigerant temperature detected by the detecting unit increases.

### ADVANTAGEOUS EFFECTS OF INVENTION

According to this invention, where the refrigerant temperature is lower than the first-temperature range, the refrigerant in the second medium passage becomes stagnant. The absolute amount of the refrigerant flowing between the rotating electric machine for driving and the heater core is therefore smaller by an amount of the refrigerant stagnating in the second medium passage. Consequently, even if the amount of heat generated by the rotating electric machine for driving is small due to a small load on the rotating electric machine for driving, the temperature of the refrigerant can be increased more rapidly than that where the refrigerant in the second medium passage is flowing without stagnating. Furthermore, where the refrigerant temperature is within the first-temperature range, the amount of flow of the refrigerant in the second medium passage is adjusted in accordance with the refrigerant temperature. Consequently, since the refrigerant that has been stagnating in the second medium passage begins to flow, the absolute amount of the refrigerant flowing between the rotating electric machine for driving and the heater core increases more than that where the refrigerant temperature is lower than the first-temperature range, by an amount of the refrigerant that has been stagnating in the second medium passage. Consequently, the change in temperature of the refrigerant can be milder. Furthermore, the refrigerant that has been stagnating in the second medium passage has a temperature lower than that of the refrigerant that flows via the rotating electric machine for driving. Hence, when the refrigerant in the second medium passage begins to flow, the temperature of the entire refrigerant can be reduced. Accordingly, a vehicle can be provided in which the temperature of a refrigerant to be supplied to the rotating electric machine for driving mounted on the vehicle is adjusted to an appropriate temperature.

Moreover, when the heater core is further provided with the third medium passage and the second adjusting valve, the refrigerant in the second medium passage and the second medium passage becomes stagnant where the refrigerant temperature is lower than the first-temperature range. Furthermore, where the refrigerant temperature is lower than the second-temperature range, the refrigerant in the third medium passage becomes stagnant. As described above, the stagnant amount of the refrigerant increases as the refrigerant temperature decreases. Consequently, the absolute amount of the refrigerant that flows between the rotating electric machine for driving and the heater core decreases. Consequently, the temperature of the refrigerant can be increased rapidly. Furthermore, the stagnant amount of the refrigerant decreases as the refrigerant temperature increases. Consequently, the absolute amount of the refrigerant that flows between the rotating electric machine for driving and the heater core increases. The change in temperature of the refrigerant can thus be milder. Furthermore, the refrigerant that has been stagnating in the second medium passage or the third medium passage has a temperature lower than that of the refrigerant that flows via the rotating electric machine for driving. Hence, when the refrigerant in the second medium passage or the third medium passage begins to flow, the temperature of the entire refrigerant can be reduced.

### BRIEF DESCRIPTION OF DRAWINGS

Fig. 1 is an overall block diagram of a vehicle according to a first embodiment.
Fig. 2 is a diagram for illustrating the structure of a portion of the vehicle according to the first embodiment.
Fig. 3 is a diagram showing the structure of a heater core mounted on the vehicle according to the first embodiment.
Fig. 4 is a (first) diagram for illustrating a function of the heater core mounted on the vehicle according to the first embodiment.
Fig. 5 is a (second) diagram for illustrating a function of the heater core mounted on the vehicle according to the first embodiment.
Fig. 6 is a diagram showing an another example of the structure of the heater core according to the first embodiment.
Fig. 7 is a diagram showing the structure of a heater core mounted on a vehicle according to a second embodiment.
Fig. 8 is a diagram showing the structure of a heater core mounted on a vehicle according to a third embodiment.
Fig. 9 is a flowchart showing a control structure of a program executed by an ECU mounted on the vehicle according to the third embodiment.
Fig. 10 is a diagram showing a relationship between the temperature of operating oil and the amount of opening of a valve.

### DESCRIPTION OF EMBODIMENTS

Embodiments of the present invention will be described hereinafter, with reference to the drawings. In the following description, the same components are denoted by the same symbols. The names and functions thereof are also the same. Accordingly, detailed description thereof will not be repeated.

### <First Embodiment>

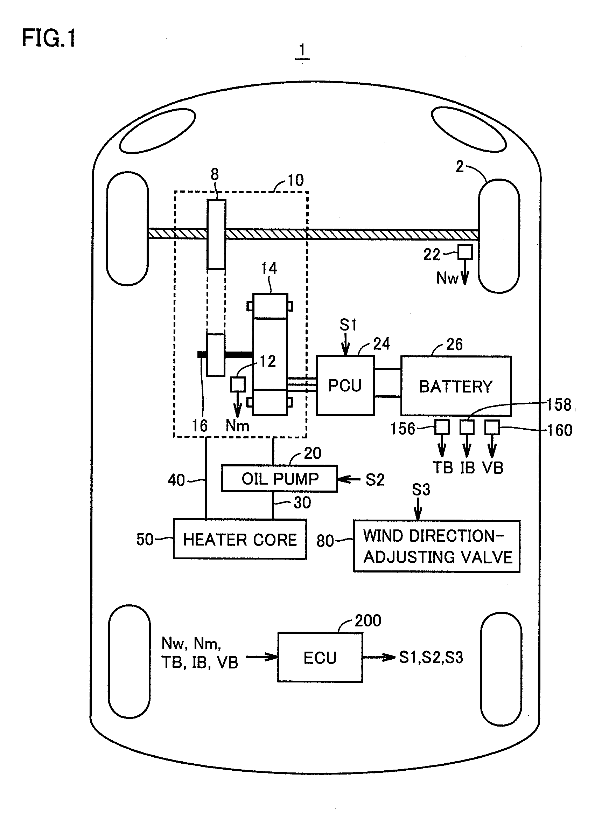

With reference to Fig. 1, an overall block diagram of a vehicle 1 according to the present embodiment will be described. Vehicle 1 includes a wheel 2, a transmission 10, an electrically driven pump 20, a PCU (Power Control Unit) 24, a battery 26, a first pipe 30, a second pipe 40, a heater core 50, a wind direction-adjusting valve 80, and an ECU (Electronic Control Unit) 200.

Transmission 10 includes a drive shaft 16, a motor generator (hereinafter denoted as MG) 14, and a reduction gear 8. A refrigerant for cooling MG14 and lubricating between various structural components is stored within transmission 10. While a case of using operating oil as the refrigerant will be described below, the refrigerant is not particularly limited to the operating oil. A liquid such as coolant or the like or a gas may also be used as the refrigerant, for example.

Vehicle 1 runs with driving force output from MG14. MG 14 is a three-phase AC rotating electric machine, for example. MG14 is driven by PCU24.

MG14 has a function as a drive motor that provides wheel 2 with driving force by using electric power stored in battery 26. MG 14 also has a function as a generator for charging battery 26 via PCU 24 by using electric power generated by regenerative braking.

Reduction gear 8 transmits mechanical power from MG14 to wheel 2. Reduction gear 8 also transmits reaction force received by wheel 2 from a road surface to MG 14.

PCU24 converts DC electric power stored in battery 26 into AC electric power for driving MG14. PCU 24 includes a converter and an inverter (both not shown) that are controlled based on a control signal S1 from ECU200. The converter increases voltage of the DC electric power received from battery 26, for output to the inverter. The inverter converts the DC electric power output from the converter into AC electric power, for output to MG14. MG14 is thus driven using the electric power stored in battery 26. The inverter also converts AC electric power generated by MG14 into DC electric power, for output to the converter. The converter reduces voltage of the DC electric power output from the inverter, for output to battery 26. Battery 26 is thus charged using the electric power generated by MG14. It is noted that the converter may not be provided.

Battery 26 is a power storage device and a rechargeable DC electric power supply. For example, a secondary battery such as a nickel-metal hydride secondary battery, a lithium ion secondary battery, or the like is used as battery 26. Battery 26 may be charged using, other than the electric power generated by MG14 as described above, electric power supplied from an external power supply (not shown). It is noted that battery 26 is not limited to a secondary battery, and may be anything that can generate DC voltage, such as a capacitor, a solar cell, or a fuel cell, for example.

Battery 26 is provided with a battery temperature sensor 156 for detecting a battery temperature TB of battery 26, a current sensor 158 for detecting a current TB of battery 26, and a voltage sensor 160 for detecting a voltage VB of battery 26.

Battery temperature sensor 156 transmits a signal indicating battery temperature TB to ECU 200. Current sensor 158 transmits a signal indicating current IB to ECU 200. Voltage sensor 160 transmits a signal indicating current VB to ECU 200.

A resolver 12 detects a rotational speed Nm of MG14. Resolver 12 transmits a signal indicating detected rotational speed Nm to ECU200.

A wheel speed sensor 22 detects rotational speed Nw of wheel 2. Wheel speed sensor 22 transmits a signal indicating detected rotational speed Nw to ECU200. ECU200 calculates a vehicle speed V based on rotational speed Nw received. It is noted that ECU200 may also calculate vehicle speed V based on rotational speed Nm of MG14 instead of rotational speed Nw.

ECU200 generates a control signal S 1 for controlling PCU24, and outputs generated control signal S1 to PCU24.

ECU200 calculates requested driving force that corresponds to an amount of depression of an accelerator pedal (not shown) provided at a driver's seat. ECU200 controls torque of MG14 in accordance with the calculated requested driving force.

Heater core 50 is incorporated into an air-conditioner (not shown) mounted on vehicle 1. The air-conditioner includes a blower fan, an evaporator that is a part of a refrigeration cycle, heater core 50, and wind direction-adjusting valve 80. The air-conditioner controls wind direction-adjusting valve 80 and the blower fan, and cools a vehicle compartment by blowing air into the vehicle compartment through the evaporator, or heats the vehicle compartment by blowing air into the vehicle compartment through heater core 50.

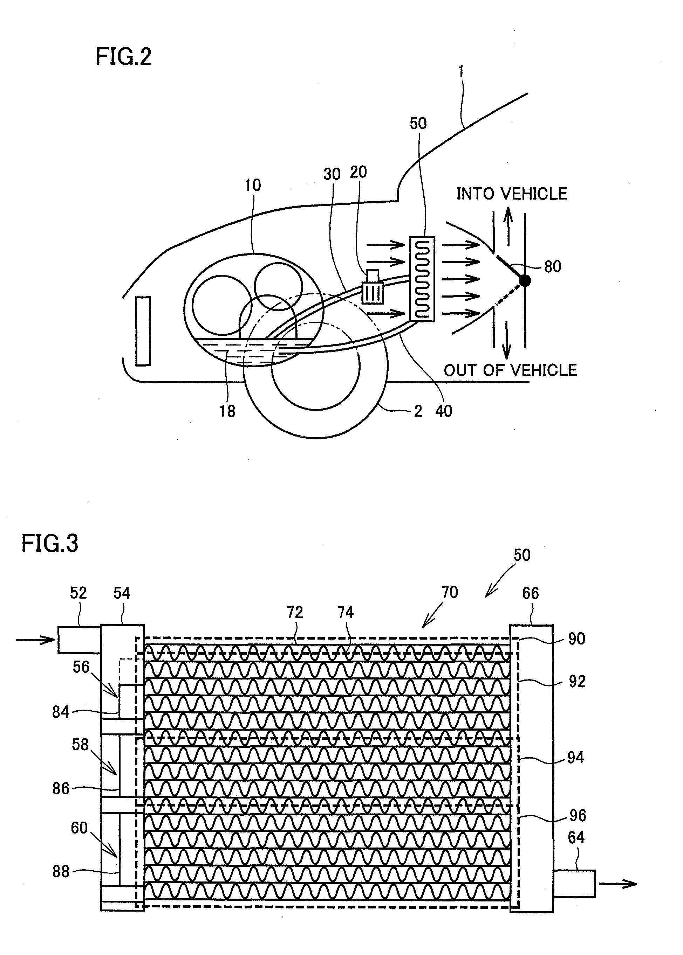

Wind direction-adjusting valve 80 changes the position of a valve body of wind direction-adjusting valve 80 between a position shown by a solid line in Fig. 2 and a position shown by a broken line in Fig. 2, based on a control signal S3 from ECU200. When the valve body of wind direction-adjusting valve 80 is in the position shown by the solid line in Fig. 2, air passing through heater core 50 flows out of the vehicle. On the other hand, when the valve body of wind direction-adjusting valve 80 is in the position shown by the broken line in Fig. 2, air passing through heater core 50 flows into the vehicle compartment.

ECU200 may control wind direction-adjusting valve 80 so that the valve body is in the position shown by the solid line in Fig. 2, in accordance with, for example, a passenger's request or a cooling request due to a present temperature being higher than a target temperature. Alternatively, ECU200 may control wind direction-adjusting valve 80 so that the valve body is in the position shown by the broken line in Fig. 2, in accordance with, for example, a passenger's request or a heating request due to the present temperature being lower than the target temperature.

Heater core 50 and transmission 10 are connected with first pipe 30 and second pipe 40. Electrically driven pump 20 is provided midway in first pipe 30. When electrically driven pump 20 is operated, the operating oil within transmission 10 is supplied to heater core 50. Electrically driven pump 20 may be provided so that the operating oil circulates between heater core 50 and transmission 10, and is not necessarily provided midway in first pipe 30, in particular. Electrically driven pump 20 may be provided within any of transmission 10, second pipe 40, and heater core 50, or electrically driven pumps 20 may be provided in a plurality of places.

As shown in Fig. 2, transmission 10 includes oil pan 18 that stores the operating oil therein. Oil pan 18 is a reservoir for storing the operating oil that circulates in transmission 10 or via heater core 50. Oil pan 18 is provided in a lower portion of transmission 10, for example.

One end of first pipe 30 is disposed to be lower than a fluid level of the operating oil stored in oil pan 18. The other end of first pipe 30 is connected to an inlet portion of heater core 50. It is noted that first pipe 30 and heater core 50 may be integrally formed.

One end of second pipe 40 is connected to transmission 10 so that the operating oil that flows from heater core 50 via second pipe 40 is allowed to circulate in oil pan 18. The other end of second pipe 40 is connected to an outlet portion of heater core 50. It is noted that second pipe 40 and heater core 50 may be integrally formed. Moreover, it is only necessary that the one end of second pipe 40 be connected to transmission 10, and it is not particularly necessary that the operating oil flowing in second pipe 40 be directly returned to oil pan 18. Furthermore, the one end of second pipe 40 may be connected to a structural component other than transmission 10. In this way, the operating oil flowing in second pipe 40 can be used to cool or lubricate the other structural component.

Electrically driven pump 20 operates based on a control signal S2 from ECU200. During operation, electrically driven pump 20 sucks the operating oil stored in oil pan 18 from the one end of first pipe 30, and pumps the operating oil to the inlet portion of heater core 50. The operating oil pumped into heater core 50 from transmission 10 via first pipe 30 passes through heater core 50 and then circulates in oil pan 18 of transmission 10 via second pipe 40.

ECU200 may, for example, start the operation of electrically driven pump 20 at the time of starting the system of vehicle 1, and stop the operation of electrically driven pump 20 at the time of stopping the system of vehicle 1. Alternatively, ECU200 may, for example, start the operation of electrically driven pump 20 where the temperature of the operating oil at an inlet tank portion 54 is above an operation start temperature, and stop the operation of electrically driven pump 20 where the temperature of the operating oil at inlet tank portion 54 is below an operation stop temperature (≤ operation start temperature).

An oil pump (not shown) that is operated by MG14 is provided inside transmission 10. The oil pump is operated when MG14 is driven. When the oil pump is operated, the operating oil stored in oil pan 18 is sucked to be supplied to structural components such as a rotor, a stator, a rotation shaft, various gears, and the like of MG14, and used to lubricate and cool each structural component. It is noted that electrically driven pump 20 may have a function of allowing the operating oil to circulate between transmission 10 and heater core 50, and a function of allowing the operating oil to circulate in transmission 10.

As shown in Fig. 3, heater core 50 includes inlet tank portion 54, an outlet tank portion 66, and a core portion 70. An upper side of inlet tank portion 54 as seen on the sheet surface of Fig. 3 is provided with an inlet portion 52. Inlet portion 52 is connected to the other end of first pipe 30. A lower side of outlet tank portion 66 as seen on the sheet surface of Fig. 3 is provided with an outlet portion 64. Outlet portion 64 is connected to the other end of second pipe 40.

Core portion 70 is provided between inlet tank portion 54 and outlet tank portion 66. Core portion 70 includes a plurality of tubes 72 and a plurality of radiator fins 74. Tube 72 is a hollow-shaped medium passage, and has a pipe shape, for example. The plurality of tubes 72 are provided in parallel with one another, and connect inlet tank portion 54 and outlet tank portion 66. Each of the plurality of radiator fins 74 is provided between the plurality of tubes 72.

Radiator fin 74 is formed by bending a plate-shaped member to have a waveform that includes a plurality of peaks and troughs. The peaks and troughs of the waveform of radiator fin 74 are provided to abut each of the neighboring two tubes 72. Radiator fin 74 has a length from inlet tank portion 54 to outlet tank portion 66.

A first region 90, a second region 92, a third region 94, and a fourth region 96 are defined in core portion 70. First region 90 is a region of core portion 70 within the area of the broken line in an uppermost stage in Fig. 3. Second region 92 is a region of core portion 70 within the area of the broken line in a middle stage in Fig. 3, which is lower than first region 90. Third region 94 is a region of core portion 70 within the area of the broken line in the middle stage in Fig. 3, which is lower than second region 92. Fourth region 96 is a region of core portion 70 within the area of the broken line in a lowermost stage in Fig. 3. First region 90, second region 92, third region 94, and fourth region 96 are regions that do not overlap with one another. While it is described in the present embodiment that the four regions are defined in core portion 70, the number of the regions is not particularly limited to four, so long as a plurality of regions are defined. For example, five or more regions may be defined, or three or less regions may be defined.

A first adjusting valve 56, a second adjusting valve 58, and a third adjusting valve 60 are provided in inlet tank portion 54. First adjusting valve 56 adjusts an amount of flow of the operating oil that flows in tubes 72 in second region 92. It is noted that tubes 72 in second region 92 include all tubes 72 present in a space where second region 92 is projected in a rear direction of the sheet surface of Fig. 3.

Second adjusting valve 58 adjusts an amount of flow of the operating oil that flows in tubes 72 in third region 94. It is noted that tubes 72 in third region 94 include all tubes 72 present in a space where third region 94 is projected in the rear direction of the sheet surface of Fig. 3.

Third adjusting valve 60 adjusts an amount of flow of the operating oil that flows in tubes 72 in fourth region 96. It is noted that tubes 72 in fourth region 96 include all tubes 72 present in a space where fourth region 96 is projected in the rear direction of the sheet surface of Fig. 3.

First adjusting valve 56 includes a first valve body 84 for blocking connected portions between inlet tank portion 54 and tubes 72 present in second region 92. First adjusting valve 56 changes an amount of opening of the valve by causing first valve body 84 to mechanically move in a vertical direction of the sheet surface of Fig. 3, in accordance with a temperature Toil of the operating oil within inlet tank portion 54. First valve body 84 mechanically moves by utilizing, for example, force created at the time of deformation of a member that is deformed by the heat of the operating oil.

That is, where temperature Toil of the operating oil is lower than first temperature Toil (1), first adjusting valve 56 is in a closed position, with all the connected portions between inlet tank portion 54 and tubes 72 in second region 92 being blocked by first valve body 84. The closed position refers to a state where the amount of opening of the valve is 0%.

For example, where first valve body 84 of first adjusting valve 56 is in a position shown by the thin broken line in Fig. 3, a blocked state is obtained between inlet tank portion 54 and each of tubes 72 in second region 92. At this time, the flow of the operating oil from inlet tank portion 54 to outlet tank portion 66 through each of tubes 72 in second region 92 is prevented by first valve body 84. First temperature Toil (1) is 50°C, for example, although it is not particularly limited thereto.

Where temperature Toil of the operating oil is higher than first temperature Toil (1), the amount of opening of first adjusting valve 56 is changed in accordance with temperature Toil of the operating oil.

For example, where first valve body 84 of first adjusting valve 56 is in a position shown by the solid line in Fig. 3, some connected portions of the plurality of connected portions between inlet tank portion 54 and tubes 72 in second region 92 are blocked by first valve body 84. On the other hand, the other connected portions of the plurality of connected portions are unblocked by first valve body 84. That is, the other connected portions are in an open position.

Consequently, a shut-off state is obtained between inlet tank portion 54 and some tubes 72 whose connected portions are blocked by first valve body 84. The flow of the operating oil from inlet tank portion 54 to outlet tank portion 66 through the aforementioned tubes 72 is thus prevented.

Moreover, inlet tank portion 54 and other tubes 72 whose connected portions are in the open position are in communication with one another. The flow of the operating oil from inlet tank portion 54 to outlet tank portion 66 through the aforementioned tubes 72 is thus permitted.

Where temperature Toil of the operating oil is higher than first temperature Toil (1), first valve body 84 of first adjusting valve 56 moves to a position that becomes lower on the sheet surface of Fig. 3 as the temperature Toil of the operating oil becomes higher. Consequently, the amount of opening of first adjusting valve 56 increases.

That is, as temperature Toil of the operating oil increases, the number of tubes 72 whose connected portions are blocked by first valve body 84 decreases. Therefore, during operation of electrically driven pump 20, the amount of flow of the operating oil in tubes 72 in second region 92 increases as the amount of opening of first adjusting valve 56 increases.

Where temperature Toil of the operating oil is higher than a second temperature Toil (2), first adjusting valve 56 is in the open position, with all the connected portions between inlet tank portion 54 and tubes 72 in second region 92 being in the open position. The open position refers to a state where the amount of opening of the valve is 100%. Second temperature Toil (2) is a temperature higher than first temperature Toil (1). Second temperature Toil (2) is 70°C, for example, although it is not particularly limited thereto.

At this time, inlet tank portion 54 and each of tubes 72 in second region 92 are in communication with each other. The flow of the operating oil from inlet tank portion 54 to outlet tank portion 66 through each of tubes 72 in second region 92 is thus permitted.

In the present embodiment, it is described that the amount of opening of first adjusting valve 56 in a temperature range where temperature Toil of the operating oil is higher than first temperature Toil (1) and lower than second temperature Toil (2) is proportional to temperature Toil of the operating oil; however, the relationship between the amount of opening of first adjusting valve 56 and temperature Toil of the operating oil is not limited to a proportional relationship, and may also be a nonlinear relationship.

Second adjusting valve 58 includes a second valve body 86 for blocking connected portions between inlet tank portion 54 and tubes 72 present in third region 94. Second adjusting valve 58 changes the amount of opening of the valve by causing second valve body 86 to mechanically move in the vertical direction of the sheet surface of Fig. 3, in accordance with temperature Toil of the operating oil within inlet tank portion 54. Second valve body 86 mechanically moves by utilizing, for example, force created at the time of deformation of a member that is deformed by the heat of the operating oil.

That is, where temperature Toil of the operating oil is lower than second temperature Toil (2), second adjusting valve 58 is in the closed position, with all the connected portions between inlet tank portion 54 and tubes 72 in third region 94 being blocked by second valve body 86.

At this time, inlet tank portion 54 and each of tubes 72 in third region 94 are shut off from each other. The flow of the operating oil from inlet tank portion 54 to outlet tank portion 66 through each of tubes 72 in third region 94 is thus prevented.

Where temperature Toil of the operating oil is higher than second temperature Toil (2), the amount of opening of second adjusting valve 58 is changed in accordance with temperature Toil of the operating oil.

For example, where the amount of opening of second adjusting valve 58 changes between the open position and the closed position, some connected portions of the plurality of connected portions between inlet tank portion 54 and tubes 72 in third region 94 are blocked by second valve body 86. On the other hand, the other connected portions are unblocked by second valve body 86. That is, the other connected portions are in the open position.

Consequently, a shut-off state is obtained between inlet tank portion 54 and some tubes 72 whose connected portions are blocked by second valve body 86. The flow of the operating oil from inlet tank portion 54 to outlet tank portion 66 through the aforementioned tubes 72 is thus prevented.

On the other hand, inlet tank portion 54 and other tubes 72 whose connected portions are in the open position are in communication with one another. The flow of the operating oil from inlet tank portion 54 to outlet tank portion 66 through the aforementioned tubes 72 is thus permitted.

Where temperature Toil of the operating oil is higher than second temperature Toil (2), second valve body 86 of second adjusting valve 58 moves to a position that becomes lower on the sheet surface of Fig. 3 as the temperature Toil of the operating oil becomes higher. Consequently, the amount of opening of the valve of second adjusting valve 58 increases.

That is, as temperature Toil of the operating oil increases, the number of tubes 72 whose connected portions are blocked by second valve body 86 decreases. Therefore, during operation of electrically driven pump 20, the amount of flow of the operating oil in tubes 72 in third region 94 increases as the amount of opening of second adjusting valve 58 increases.

Where temperature Toil of the operating oil is higher than a third temperature Toil (3), second adjusting valve 58 is in the open position, with all the connected portions between inlet tank portion 54 and tubes 72 in third region 94 being opened. Third temperature Toil (3) is a temperature higher than second temperature Toil (2). Third temperature Toil (3) is 90°C, for example, although it is not particularly limited thereto.

At this time, inlet tank portion 54 and each of tubes 72 in third region 94 are in communication with each other. The flow of the operating oil from inlet tank portion 54 to outlet tank portion 66 through each of tubes 72 in third region 94 is thus permitted.

In the present embodiment, it is described that the amount of opening of second adjusting valve 58 in a temperature range where temperature Toil of the operating oil is higher than second temperature Toil (2) and lower than third temperature Toil (3) is proportional to temperature Toil of the operating oil; however, the relationship between the amount of opening of second adjusting valve 58 and temperature Toil of the operating oil is not limited to a proportional relationship, and may also be a nonlinear relationship.

Third adjusting valve 60 includes a third valve body 88 for blocking connected portions between inlet tank portion 54 and tubes 72 present in fourth region 96. Third adjusting valve 60 changes the amount of opening of the valve by causing third valve body 88 to mechanically move in the vertical direction of the sheet surface of Fig. 3, in accordance with temperature Toil of the operating oil within inlet tank portion 54. Third valve body 88 mechanically moves by utilizing, for example, force created at the time of deformation of a member that is deformed by the heat of the operating oil.

That is, where temperature Toil of the operating oil is lower than third temperature Toil (3), third adjusting valve 60 is in the closed position, with all the connected portions between inlet tank portion 54 and tubes 72 in fourth region 96 being blocked by third valve body 88.

At this time, inlet tank portion 54 and each of tubes 72 in fourth region 96 are shut off from each other. The flow of the operating oil from inlet tank portion 54 to outlet tank portion 66 through each of tubes 72 in fourth region 96 is thus prevented.

Where temperature Toil of the operating oil is higher than third temperature Toil (3), the amount of opening of third adjusting valve 60 is changed in accordance with temperature Toil of the operating oil.

For example, where the amount of opening of third adjusting valve 60 changes between the open position and the closed position, some connected portions of the plurality of connected portions between inlet tank portion 54 and tubes 72 in fourth region 96 are blocked by third valve body 88. On the other hand, the other connected portions are unblocked by third valve body 88. That is, the other connected portions are in the open position.

Consequently, a shut-off state is obtained between inlet tank portion 54 and some tubes 72 whose connected portions are blocked by third valve body 88. The flow of the operating oil from inlet tank portion 54 to outlet tank portion 66 through the aforementioned tubes 72 is thus prevented.

On the other hand, inlet tank portion 54 and other tubes 72 whose connected portions are in the open position are in communication with one another. The flow of the operating oil from inlet tank portion 54 to outlet tank portion 66 through the aforementioned tubes 72 is thus permitted.

Where temperature Toil of the operating oil is higher than third temperature Toil (3), third valve body 88 of third adjusting valve 60 moves to a position that becomes lower on the sheet surface of Fig. 3 as the temperature Toil of the operating oil becomes higher. Consequently, the amount of the opening of the valve of third adjusting valve 60 increases.

That is, as temperature Toil of the operating oil increases, the number of tubes 72 whose connected portions are blocked by third valve body 88 decreases. Therefore, during operation of electrically driven pump 20, the amount of flow of the operating oil in tubes 72 in fourth region 96 increases as the amount of opening of third adjusting valve 60 increases.

Where temperature Toil of the operating oil is higher than a fourth temperature Toil (4), third adjusting valve 60 is in the open position, with all the connected portions between inlet tank portion 54 and tubes 72 in fourth region 96 being opened. Third temperature Toil (4) is a temperature higher than third temperature Toil (3). Fourth temperature Toil (4) is 110°C, for example, although it is not particularly limited thereto.

At this time, inlet tank portion 54 and each of tubes 72 in fourth region 96 are in communication with each other. The flow of the operating oil from inlet tank portion 54 to outlet tank portion 66 through each of tubes 72 in fourth region 96 is thus permitted.

In the present embodiment, it is described that the amount of opening of third adjusting valve 60 in a temperature range where temperature Toil of the operating oil is higher than first temperature Toil (3) and lower than fourth temperature Toil (4) is proportional to temperature Toil of the operating oil; however, the relationship between the amount of opening of third adjusting valve 60 and temperature Toil of the operating oil is not limited to a proportional relationship, and may also be a nonlinear relationship.

In the present embodiment, tubes 72 in first region 90 are not provided with an adjusting valve such as first adjusting valve 56, second adjusting valve 58, or third adjusting valve 60. A connected portion between inlet tank portion 54 and tube 72 in first region 90 is therefore in the open position. Consequently, the flow of the operating oil from inlet tank portion 54 to outlet tank portion 66 through first region 90 is thus permitted. During operation of electrically driven pump 20, the operating oil flows in tube 72 in first region 90, regardless of temperature Toil of the operating oil.

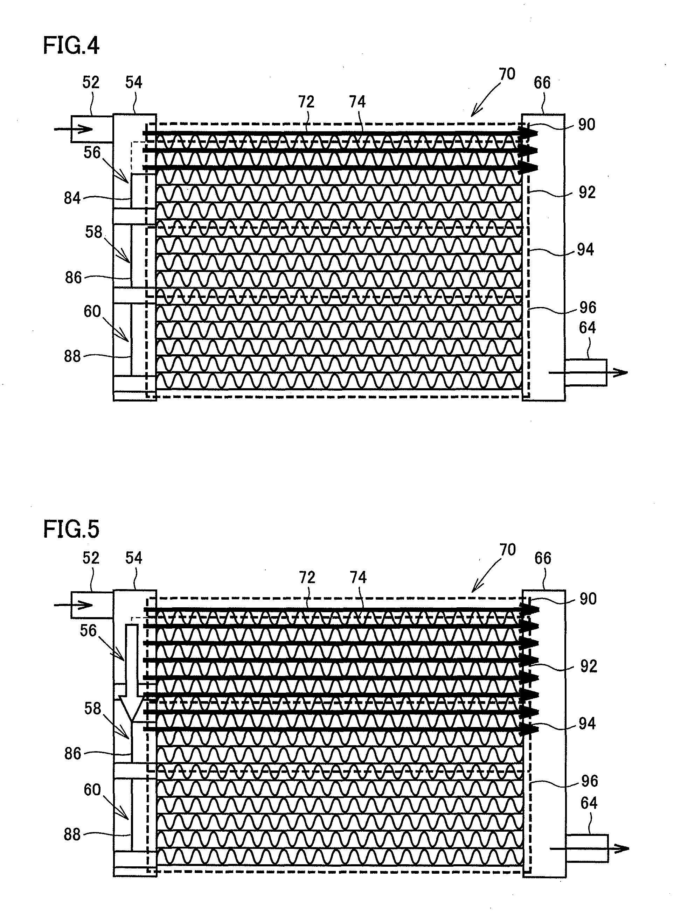

Functions of heater core 50 having the structure as described above mounted on vehicle 1 will be described with Figs. 4 and 5. In the following description, it is assumed that electrically driven pump 20 is in operation.

### <Where Temperature Toil of Operating oil Is Lower Than First Temperature Toil (1))

Where temperature Toil of the operating oil is lower than first temperature Toil (1) (this case will hereinafter be described as the case where temperature Toil of the operating oil is within a first-temperature range), first adjusting valve 56, second adjusting valve 58, and third adjusting valve 60 are all in the closed position.

At this time, the flow of the operating oil in tubes 72 in second region 92, third region 94, and fourth region 96 is prevented. The operating oil in tubes 72 in second region 92, third region 94, and fourth region 96 thus stagnates in heater core 50.

On the other hand, where electrically driven pump 20 is in operation, the operating oil in tube 72 in first region 90 flows from inlet tank portion 54 to outlet tank portion 66. The operating oil supplied to heater core 50 from transmission 10 by electrically driven pump 20 therefore flows to outlet tank portion 66 through tube 72 in first region 90 only.

Since the operating oil in tubes 72 in second region 92, third region 94, and fourth region 96 becomes stagnant, the absolute amount of the operating oil that circulates between transmission 10 and heater core 50 is smaller by a stagnant amount of the operating oil. Temperature Toil of the operating oil that flows between transmission 10 and heater core 50, therefore, increases due to the operation of MG14 more rapidly than that where the operating oil does not stagnate in second region 92, third region 94, and fourth region 96.

### <Where Temperature Toil of Operating oil Is Higher Than First Temperature Toil (1) and Lower Than Second Temperature Toil (2))

Where temperature Toil of the operating oil is higher than first temperature Toil (1) and lower than second temperature Toil (2) (this case will hereinafter be described as the case where temperature Toil of the operating oil is within a second-temperature range), second adjusting valve 58 and third adjusting valve 60 are both in the closed position. The flow of the operating oil is thus prevented by second valve body 86 and third valve body 88 in tubes 72 in third region 94 and fourth region 96.

Furthermore, first valve body 84 of first adjusting valve 56 has been moved to a position corresponding to temperature Toil of the operating oil. Assume, for example, a case where the amount of opening of first adjusting valve 56 is that shown in Fig. 4. The flow of the operating oil is prevented in some tubes 72 in second region 92 whose connected portions with inlet tank portion 54 are blocked by first valve body 84. The operating oil in tubes 72 in which flow is prevented thus stagnates in heater core 50.

On the other hand, the flow of the operating oil is permitted in other tubes 72 in second region 92 whose connected portions with inlet tank portion 54 are in the open position. Other tubes 72 in second region 92 refer to tubes 72 in second region 92 other than some tubes 72 whose connected portions with inlet tank portion 54 are blocked by first valve body 84.

Where electrically driven pump 20 is in operation, the operating oil in tube 72 in first region 90 and other tubes 72 in second region 92 flows from inlet tank portion 54 to outlet tank portion 66.

As shown by the arrows in Fig. 4, the operating oil supplied to heater core 50 from transmission 10 by electrically driven pump 20 flows in tube 72 in first region 90 and each of tubes 72 in second region 92 whose connected portions with inlet tank portion 54 are in the open position.

In heater core 50, the number of tubes 72 in which the operating oil supplied from transmission 10 is permitted to flow from inlet tank portion 54 to outlet tank portion 66 is greater where temperature Toil of the operating oil is in the second-temperature range than that where temperature Toil of the operating oil in the first-temperature range.

The stagnant amount of the operating oil in heater core 50 decreases more than that where temperature Toil of the operating oil is in the first-temperature range. A circulating amount of the operating oil that receives heat from MG14 increases due to the decrease in the stagnant amount thereof. Increase in temperature is thus milder than that where temperature Toil of the operating oil is within the first-temperature range, even if the operating oil receives the same amount of heat from MG14. Moreover, the temperature of the operating oil that has been stagnating is lower than the temperature of the operating oil that is circulating. Therefore, when the operating oil that has been stagnating is mixed with the circulating operating oil, an increase in temperature of the circulating operating oil can be reduced.

### <Where Temperature Toil of Operating oil Is Higher Than Second Temperature Toil (2) and Lower Than Third Temperature Toil (3))

Where temperature Toil of the operating oil is higher than second temperature Toil (2) and lower than third temperature Toil (3) (this case will hereinafter be described as the case where temperature Toil of the operating oil is within a third-temperature range), third adjusting valve 60 is in the closed position. The flow of the operating oil is thus prevented by third valve body 88 in tubes 72 in fourth region 96.

Furthermore, second valve body 86 of second adjusting valve 58 has been moved to a position corresponding to temperature Toil of the operating oil. The flow of the operating oil is prevented in some tubes 72 in third region 94 whose connected portions with inlet tank portion 54 are blocked by second valve body 86. The operating oil in tubes 72 in which flow is prevented thus stagnates in heater core 50.

On the other hand, the flow of the operating oil is permitted in other tubes 72 in third region 94 whose connected portions with inlet tank portion 54 are in the open position. Other tubes 72 in third region 94 refer to tubes 72 in third region 94 other than some tubes 72 whose connected portions with inlet tank portion 54 are blocked by second valve body 86.

First adjusting valve 56 is in the open position. Therefore, when electrically driven pump 20 is in operation, the operating oil in tube 72 in first region 90 and other tubes 72 in second region 92, as well as in other tubes 72 in third region 92, flows from inlet tank portion 54 to outlet tank portion 66.

The operating oil supplied to heater core 50 from transmission 10 by electrically driven pump 20 flows in tube 72 in first region 90 and each of tubes 72 in second region 92 and other tubes 72 in third region 94.

In heater core 50, the number of tubes 72 in which the operating oil supplied from transmission 10 is permitted to flow from inlet tank portion 54 to outlet tank portion 66 is greater where temperature Toil of the operating oil is in the third-temperature range than that where temperature Toil of the operating oil in the second-temperature range.

The stagnant amount of the operating oil in heater core 50 decreases more than that where temperature Toil of the operating oil is in the second-temperature range. The circulating amount of the operating oil that receives heat from MG14 increases due to the decrease in the stagnant amount thereof. Increase in temperature is thus milder than that where temperature Toil of the operating oil is within the second-temperature range, even if the operating oil receives the same amount of heat from MG14.

### <Where Temperature Toil of Operating oil Is Higher Than Third Temperature Toil (3) and Lower Than Fourth Temperature Toil (4))

Where temperature Toil of the operating oil is higher than third temperature Toil (3) and lower than fourth temperature Toil (4) (this case will hereinafter be described as the case where temperature Toil of the operating oil is within a fourth-temperature range), third valve body 88 of third adjusting valve 60 has been moved to a position corresponding to temperature Toil of the operating oil. The flow of the operating oil is prevented in some tubes 72 in fourth region 96 whose connected portions with inlet tank portion 54 are blocked by third valve body 88. The operating oil in tubes 72 in which flow is prevented thus stagnates in heater core 50.

On the other hand, the flow of the operating oil is permitted in other tubes 72 in fourth region 96 whose connected portions with inlet tank portion 54 are in the open position. Other tubes 72 in fourth region 96 refer to tubes 72 in fourth region 96 other than some tubes 72 whose connected portions with inlet tank portion 54 are blocked by third valve body 88.

First adjusting valve 56 and second adjusting valve 58 are both in the open position. Therefore, where electrically driven pump 20 is in operation, the operating oil in tubes 72 in first region 90, second region 92 and third region 94, as well as in other tubes 72 in fourth region 96, flows from inlet tank portion 54 to outlet tank portion 66.

The operating oil supplied to heater core 50 from transmission 10 by electrically driven pump 20 flows in tubes 72 in first region 90, second region 92 and third region 94, and each of other tubes 72 in fourth region 96.

In heater core 50, the number of tubes 72 in which the operating oil supplied from transmission 10 is permitted to flow from inlet tank portion 54 to outlet tank portion 66 is greater where temperature Toil of the operating oil is in the fourth-temperature range than that where temperature Toil of the operating oil in the third-temperature range.

The stagnant amount of the operating oil in heater core 50 decreases more than that where temperature Toil of the operating oil is in the third-temperature range. The circulating amount of the operating oil that receives heat from MG14 increases due to the decrease in the stagnant amount thereof. Increase in temperature is thus milder than that where temperature Toil of the operating oil is within the third-temperature range, even if the operating oil receives the same amount of heat from MG14.

### <Where Temperature Toil of Operating oil Is Higher Than Fourth Temperature Toil (4))

Where temperature Toil of the operating oil is higher than fourth temperature Toil (4) (this case will hereinafter be described as the case where temperature Toil of the operating oil is within a fifth-temperature range), first adjusting valve 56, second adjusting valve 58, and third adjusting valve 60 are all in the open position. The flow of the operating oil in all tubes 72 in first region 90, second region 92, third region 94, and fourth region 96 is permitted.

The stagnant state of the operating oil in heater core 50 is eliminated. The circulating amount of the operating oil that receives heat from MG14 increases due to the elimination of the stagnation. Increase in temperature is thus milder than that where temperature Toil of the operating oil is within the fourth-temperature range, even if the operating oil receives the same amount of heat from MG14.

As described above, in the vehicle according to the present embodiment, where, for example, temperature Toil of the operating oil is within the first-temperature range, the operating oil in tubes 72 in second region 92, third region 94, and fourth region 96 becomes stagnant. The absolute amount of the operating oil that circulates between MG14 and heater core 50 is thus smaller by the stagnant amount of the operating oil in tubes 72 in second region 92, third region 94, and fourth region 96. Consequently, even if the amount of heat generated by MG14 is small due to a small load on MG14, the temperature of the operating oil can be increased more rapidly than that where the operating oil in tubes 72 is circulating without stagnating in second region 92, third region 94, and fourth region 96. Moreover, where temperature Toil of the operating oil is in the second-temperature range, the amount of flow of the operating oil in tubes 72 in second region 92 is adjusted in accordance with temperature Toil of the operating oil. Consequently, the operating oil that has been stagnating in tubes 72 in second region 92 begins to circulate. The absolute amount of the operating oil that circulates between MG14 and heater core 50 thus increases more than where temperature Toil of the operating oil is within the first-temperature range, by the amount that the stagnation of the operating oil in tubes 72 in second region 92 has been eliminated. Consequently, the change in temperature of the operating oil can be milder. Furthermore, the operating oil that has been stagnating in tubes 72 in second region 92 has a temperature lower than that of the operating oil that circulates via MG14. Hence, when the stagnation of the operating oil in tubes 72 in second region 92 is eliminated, the temperature of the entire operating oil can be reduced. Accordingly, a vehicle can be provided in which the temperature of a refrigerant to be supplied to the rotating electric machine for driving mounted on the vehicle is adjusted to an appropriate temperature.

In the present embodiment, it is described that the first-temperature range and the second-temperature range do not overlap with each other, the second-temperature range and the third-temperature range do not overlap with each other, the third-temperature range and the fourth-temperature range do not overlap with each other, and the fourth-temperature range and the fifth-temperature range do not overlap with each other; however, the present invention is not particularly limited thereto.

For example, an upper limit value of the first-temperature range may be greater than a lower limit value of the second-temperature range. An upper limit value of the second-temperature range may also be greater than a lower limit value of the third-temperature range. Alternatively, an upper limit value of the third-temperature range may be greater than a lower limit value of the fourth-temperature range. An upper limit value of the fourth-temperature range may also be greater than a lower limit value of the fifth-temperature range.

Moreover, first temperature Toil (1) may be included in either one of the first-temperature range and the second-temperature range. Second temperature Toil (2) may also be included in either one of the second-temperature range and the third-temperature range. Third temperature Toil (3) may also be included in either one of the third-temperature range and the fourth-temperature range. Fourth temperature Toil (4) may be included in either one of the fourth-temperature range and the fifth-temperature range.

In the present embodiment, it is described that first valve body 84, second valve body 86, and third valve body 88 move in the vertical direction of the sheet surface of each of Figs. 3, 4, and 5; however, the direction is not particularly limited to the vertical direction. For example, first valve body 84, second valve body 86, or third valve body 88 may move in a front-rear direction of the sheet surface of each of Figs. 3, 4, and 5.

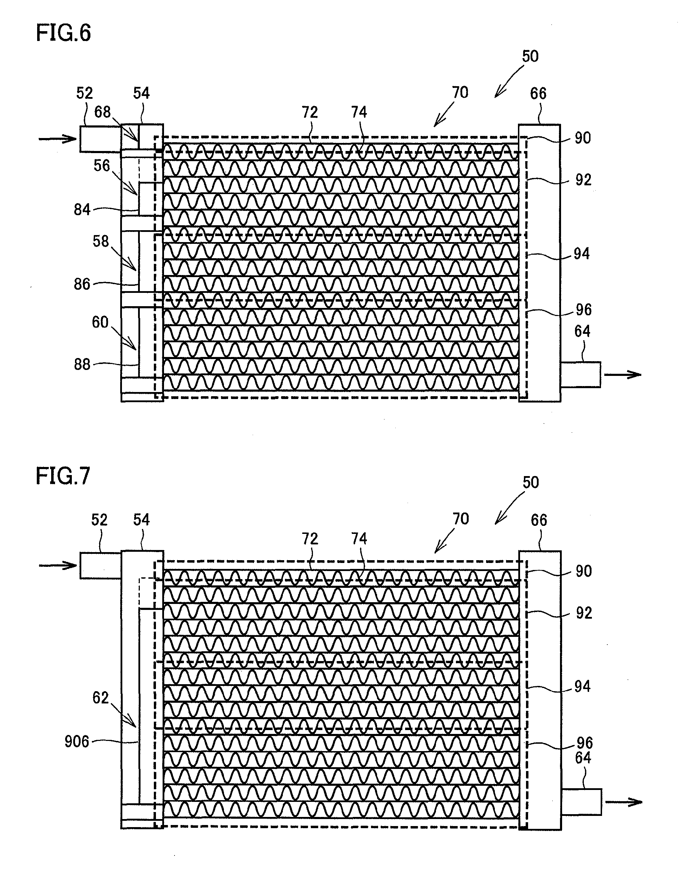

Furthermore, heater core 50 may be provided with an adjusting valve 68 in first region 90, as shown in Fig. 6. Where temperature Toil of the operating oil is within the first-temperature range, adjusting valve 68 changes the amount of opening of the valve in accordance with temperature Toil of the operating oil. It is noted that adjusting valve 68 may be configured such that the amount of opening of the valve does not become 0% even when temperature Toil of the operating oil has decreased.

### <Second Embodiment>

A vehicle according to a second embodiment will be described below. The vehicle according to the present embodiment is different in structure from the vehicle according to the foregoing first embodiment in that a fourth adjusting valve 62 is provided instead of first adjusting valve 56, second adjusting valve 58, and third adjusting valve 60. The vehicle according to the present embodiment is otherwise the same in structure as vehicle 1 according to the foregoing first embodiment. The same elements are designated by the same reference signs. The functions of these elements are also the same. Detailed description thereof will not therefore be repeated here.

Inlet tank portion 54 is provided with fourth adjusting valve 62. Fourth adjusting valve 62 adjusts an amount of flow of the operating oil that flows in tubes 72 in second region 92, third region 94, and fourth region 96.

Fourth adjusting valve 62 includes a fourth valve body 89 for blocking connected portions between inlet tank portion 54 and tubes 72 present in second region 92, third region 94, and fourth region 96. Fourth adjusting valve 62 changes the amount of opening of the valve by causing fourth valve body 89 to mechanically move in the vertical direction of the sheet surface of Fig. 7, in accordance with temperature Toil of the operating oil within inlet tank portion 54. Fourth valve body 89 mechanically moves by utilizing, for example, force created at the time of deformation of a member that is deformed by the heat of the operating oil. Fourth valve body 89 may also be an electromagnetic valve.

That is, where temperature Toil of the operating oil is lower than first temperature Toil (1), fourth adjusting valve 62 is in the closed position, with all the connected portions between inlet tank portion 54 and tubes 72 in second region 92, third region 94, and fourth region 96 being blocked by fourth valve 89.

For example, where fourth valve body 89 of fourth adjusting valve 62 is in a position shown by the thin broken line in Fig. 7, a blocked state is obtained between inlet tank portion 54 and each of tubes 72 in second region 92, third region 94, and fourth region 96. At this time, the flow of the operating oil from inlet tank portion 54 to outlet tank portion 66 through tubes 72 in second region 92, third region 94, and fourth region 96 is prevented by fourth valve body 89.

Where temperature Toil of the operating oil is higher than first temperature Toil (1), the amount of opening of fourth adjusting valve 62 is changed in accordance with temperature Toil of the operating oil.

For example, where fourth valve body 89 of fourth adjusting valve 62 is in a position shown by the solid line in Fig. 7, some connected portions of the plurality of connected portions between inlet tank portion 54 and tubes 72 in second region 92, third region 94, and fourth region 96 are blocked by fourth valve body 89. On the other hand, the other connected portions of the plurality of connected portions are unblocked by fourth valve body 89. That is, the other connected portions are in the open position.

Consequently, a shut-off state is obtained between inlet tank portion 54 and some tubes 72 whose connected portions are blocked by fourth valve body 89. The flow of the operating oil from inlet tank portion 54 to outlet tank portion 66 through the aforementioned tubes 72 is thus prevented.

Moreover, inlet tank portion 54 and other tubes 72 whose connected portions are in the open position are in communication with one another. The flow of the operating oil from inlet tank portion 54 to outlet tank portion 66 through the aforementioned tubes 72 is thus permitted.

Where temperature Toil of the operating oil is higher than first temperature Toil (1), fourth valve body 89 of fourth adjusting valve 62 moves to a position that becomes lower on the sheet surface of Fig. 7 as the temperature Toil of the operating oil becomes higher. Consequently, the amount of opening of the valve of fourth adjusting valve 62 increases.

That is, as temperature Toil of the operating oil increases, the number of tubes 72 whose connected portions are blocked by fourth valve body 89 decreases. Therefore, during operation of electrically driven pump 20, the amount of flow of the operating oil in tubes 72 in second region 92, third region 94, and fourth region 96 increases as the amount of opening of fourth adjusting valve 62 increases.

Where temperature Toil of the operating oil is higher than fourth temperature Toil (4), fourth adjusting valve 62 is in the open position, with all the connected portions between inlet tank portion 54 and tubes 72 in second region 92, third region 94, and fourth region 96 being opened.

At this time, inlet tank portion 54 and each of tubes 72 in second region 92, third region 94, and fourth region 96 are in communication with each other. The flow of the operating oil from inlet tank portion 54 to outlet tank portion 66 through each of tubes 72 in second region 92, third region 94, and fourth region 96 is thus permitted.

In the present embodiment, it is described that the amount of opening of fourth adjusting valve 62 in a temperature range where temperature Toil of the operating oil is higher than first temperature Toil (1) and lower than fourth temperature Toil (4) is proportional to temperature Toil of the operating oil; however, the relationship between the amount of opening of fourth adjusting valve 62 and temperature Toil of the operating oil is not limited to a proportional relationship, and may also be a nonlinear relationship.

Functions of heater core 50 having the structure as described above mounted on vehicle 1 will be described. In the following description, it is assumed that electrically driven pump 20 is in operation.

### <Where Temperature Toil of Operating oil Is Lower Than First Temperature Toil (1))

Where temperature Toil of the operating oil is lower than first temperature Toil (1) (that is, where temperature Toil of the operating oil is within the first-temperature range), fourth adjusting valve 62 is in the closed position.

At this time, the flow of the operating oil in tubes 72 in second region 92, third region 94, and fourth region 96 is prevented. The operating oil in tubes 72 in second region 92, third region 94, and fourth region 96 stagnates in heater core 50.

On the other hand, where electrically driven pump 20 is in operation, the operating oil in tube 72 in first region 90 flows from inlet tank portion 54 to outlet tank portion 66. The operating oil supplied to heater core 50 from transmission 10 by electrically driven pump 20 therefore flows to outlet tank portion 66 through tube 72 in first region 90 only.

The operating oil in tubes 72 in second region 92, third region 94, and fourth region 96 becomes stagnant. The absolute amount of the operating oil that circulates between transmission 10 and heater core 50 is thus smaller by the stagnant amount thereof. Temperature Toil of the operating oil that flows between transmission 10 and heater core 50, therefore, increases, due to the operation of MG14, more rapidly than that where the operating oil does not stagnate in second region 92, third region 94, and fourth region 96.

### <Where Temperature Toil of Operating oil Is Higher Than First Temperature Toil (1) and Lower Than Fourth Temperature Toil (4))

Where temperature Toil of the operating oil is higher than first temperature Toil (1) and lower than fourth temperature Toil (4) (this case will hereinafter be described as the case where temperature Toil of the operating oil is within a sixth-temperature range), fourth valve body 89 of fourth adjusting valve 62 has been moved to a position corresponding to temperature Toil of the operating oil. At this time, the flow of the operating oil is prevented in some tubes 72 in second region 92, third region 94, and fourth region 96 whose connected portions with inlet tank portion 54 are blocked by fourth valve body 89. The operating oil in tubes 72 in which flow is prevented thus stagnates in heater core 50.

On the other hand, the flow of the operating oil is permitted in other tubes 72 in second region 92, third region 94 or fourth region 96 whose connected portions with inlet tank portion 54 are in the open position. Other tubes 72 in second region 92, third region 94 or fourth region 96 refer to tubes 72 in second region 92, third region 94 or fourth region 96 other than some tubes 72 whose connected portions with inlet tank portion 54 are blocked by fourth valve body 89.

Where electrically driven pump 20 is in operation, the operating oil in tube 72 in first region 90 and other tubes 72 in second region 92, third region 94 or fourth region 96 flows from inlet tank portion 54 to outlet tank portion 66.

The operating oil supplied to heater core 50 from transmission 10 by electrically driven pump 20 flows in tube 72 in first region 90 and each of tubes 72 in second region 92, third region 94 or fourth region 96 whose connected portions with inlet tank portion 54 are in the open position.

In heater core 50, the number of tubes 72 in which the operating oil supplied from transmission 10 is permitted to flow from inlet tank portion 54 to outlet tank portion 66 is greater where temperature Toil of the operating oil is in the first-temperature range than that where temperature Toil of the operating oil in the sixth-temperature range.

The stagnant amount of the operating oil in heater core 50 decreases more than that where temperature Toil of the operating oil is in the first-temperature range. The circulating amount of the operating oil that receives heat from MG14 increases due to the decrease in the stagnant amount thereof. Increase in temperature is thus milder than that where temperature Toil of the operating oil is within the first-temperature range, even if the operating oil receives the same amount of heat from MG 14. Moreover, the temperature of the operating oil that has been stagnating is lower than the temperature of the operating oil that is circulating. Therefore, when the operating oil that has been stagnating is mixed with the circulating operating oil, an increase in temperature of the circulating operating oil can be reduced.

### <Where Temperature Toil of Operating oil Is Higher Than Fourth Temperature Toil (4))

Where temperature Toil of the operating oil is higher than fourth temperature Toil (4) (that is, where temperature Toil of the operating oil is within the fifth-temperature range), fourth adjusting valve 62 is in the open position. The flow of the operating oil in all tubes 72 in first region 90, second region 92, third region 94, and fourth region 96 is permitted.

The stagnant state of the operating oil in heater core 50 is eliminated. The circulating amount of the operating oil that receives heat from MG14 increases due to the elimination of the stagnation. Increase in temperature is thus milder than that where temperature Toil of the operating oil is within the sixth-temperature range, even if the operating oil receives the same amount of heat from MG14.

As described above, with the vehicle according to the present embodiment, functions and effects similar to those of the vehicle described in the foregoing first embodiment can be achieved. Accordingly, a vehicle can be provided in which the temperature of a refrigerant to be supplied to the rotating electric machine for driving mounted on the vehicle is adjusted to an appropriate temperature.

In the present embodiment, it is described that fourth valve body 89 moves in the vertical direction of the sheet surface of Fig. 7; however, the direction is not particularly limited to the vertical direction. For example, fourth valve body 89 may move in the front-rear direction of the sheet surface of Fig. 7. Furthermore, heater core 50 may have a structure in which first region 90 is not provided.

### <Third Embodiment>

A vehicle according to a third embodiment will be described below. The vehicle according to the present embodiment is different in structure from vehicle 1 according to the foregoing first embodiment in that first adjusting valve 56, second adjusting valve 58, and third adjusting valve 60 are electromagnetic valves controlled by ECU200. The vehicle according to the present embodiment is otherwise the same in structure as vehicle 1 according to the foregoing first embodiment. The same elements are designated by the same reference signs. The functions of these elements are also the same. Detailed description thereof will not therefore be repeated here.

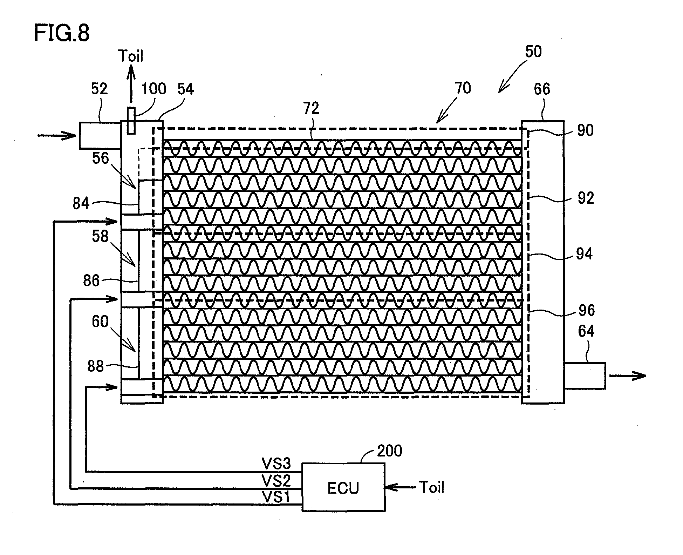

As shown in Fig. 8, a temperature sensor 100 for detecting temperature Toil of the operating oil that circulates from inlet portion 52 is provided at inlet tank portion 54 of heater core 50. Temperature sensor 100 transmits a signal indicating temperature Toil of the operating oil to ECU200.

First adjusting valve 56 is an electromagnetic valve that operates based on a control signal VS1 from ECU200. First adjusting valve 56 changes the amount of opening of the valve by causing first valve body 84 for blocking the connected portion between inlet tank portion 54 and tubes 72 in second region 92 to move, by means of magnetic force generated in response to control signal VS1.

Second adjusting valve 58 is an electromagnetic valve that operates based on a control signal VS2 from ECU200. Second adjusting valve 58 changes the amount of opening of the valve by causing second valve body 86 for blocking the connected portions between inlet tank portion 54 and tubes 72 in third region 94 to move, by means of magnetic force generated in response to control signal VS2.

Third adjusting valve 60 is an electromagnetic valve that operates based on a control signal VS3 from ECU200. Third adjusting valve 60 changes the amount of opening of the valve by causing third valve body 88 for blocking the connected portions between inlet tank portion 54 and tubes 72 in fourth region 96 to move, by means of magnetic force generated in response to control signal VS2.

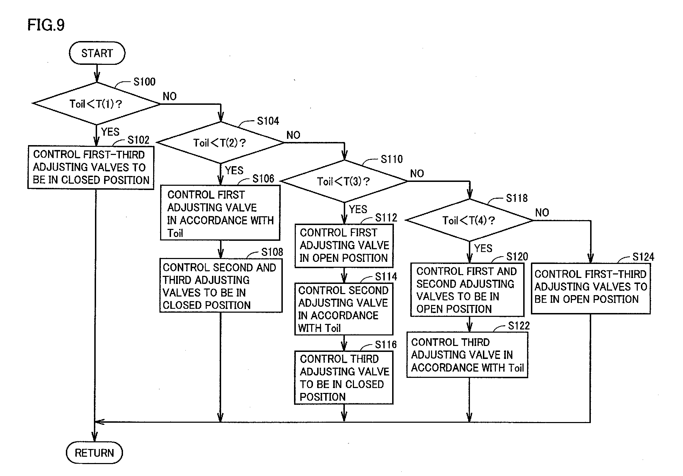

With reference to Fig. 9, a control structure of a program carried out by ECU200 mounted on vehicle 1 according to the present embodiment will be described.

In step ("step" will hereinafter be denoted as "S") 100, ECU200 determines whether temperature Toil of the operating oil is lower than first temperature Toil (1) or not. Where temperature Toil of the operating oil is lower than first temperature Toil (1), the process proceeds to S102. If not so, the process proceeds to S104.

In S102, ECU200 controls each of first adjusting valve 56, second adjusting valve 58, and third adjusting valve 60 so that they are all in the closed position.

In S104, ECU200 determines whether temperature Toil of the operating oil is lower than second temperature Toil (2) or not. Where temperature Toil of the operating oil is lower than second temperature Toil (2) (YES in S 104), the process proceeds to S106. If not so (NO in S104), the process proceeds to S110.

In S106, ECU200 controls first adjusting valve 56 so that the amount of opening of first adjusting valve 56 becomes an amount of opening of the valve corresponding to temperature Toil of the operating oil.

ECU200 may control first adjusting valve 56 so that where, for example, temperature Toil of the operating oil is first temperature Toil (1), the amount of opening of the valve becomes 0%. ECU200 may control first adjusting valve 56 so that where, for example, temperature Toil of the operating oil is second temperature Toil (2), the amount of opening of the valve becomes 100%.

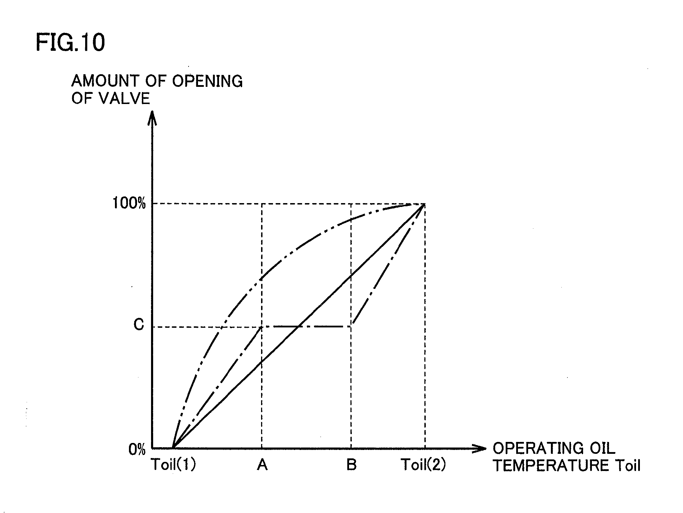

Where temperature Toil of the operating oil is between first temperature Toil (1) and second temperature Toil (2), ECU200 may control first adjusting valve 56 so that the relationship between temperature Toil of the operating oil and the amount of opening of the valve becomes a linear relationship, as shown by the solid line in Fig. 10.

Alternatively, as shown by the long dashed short dashed line in Fig. 10, in each of a case where temperature Toil of the operating oil is between first temperature Toil (1) and a first threshold value A, and a case where temperature Toil of the operating oil is between a second threshold value B (>A) and second temperature Toil (2), ECU200 may control first adjusting valve 56 so that the relationship between temperature Toil of the operating oil and the amount of opening of the valve becomes a linear relationship. Furthermore, as shown by the long dashed short dashed line in Fig. 10, where temperature Toil of the operating oil is between first threshold value A and second threshold value B, ECU200 may control first adjusting valve 56 to maintain a prescribed amount C of opening of the valve.

Alternatively, where temperature Toil of the operating oil is between first temperature Toil (1) and second temperature Toil (2), ECU200 may control first adjusting valve 56 so that the relationship between temperature Toil of the operating oil and the amount of opening of the valve becomes a nonlinear relationship. Where temperature Toil of the operating oil is between first temperature Toil (1) and second temperature Toil (2), ECU200 may control first adjusting valve 56 so that the amount of opening of the valve monotonically increases with respect to an increase in temperature Toil of the operating oil.

For example, where temperature Toil of the operating oil is between first temperature Toil (1) and second temperature Toil (2), as shown by the long dashed double-short dashed line in Fig. 10, ECU200 may control first adjusting valve 56 so that an amount of change in the amount of opening of the valve against an amount of change in temperature decreases as temperature Toil of the operating oil increases. Alternatively, where temperature Toil of the operating oil is between first temperature Toil (1) and second temperature Toil (2), ECU200 may control first adjusting valve 56 so that the amount of change in the amount of opening of the valve increases as temperature Toil of the operating oil increases.

In S108, ECU200 controls each of second adjusting valve 58 and third adjusting valve 60 so that they are both in the closed position. It is noted that where second adjusting valve 58 and third adjusting valve 60 are in the closed position, ECU200 controls each of second adjusting valve 58 and third adjusting valve 60 to maintain their closed position. The order of the processing in S 106 and the processing in S108 is not particularly limited, and the processing in S 106 and the processing in S108 may be performed in the opposite order, or may be performed in parallel.

In S110, ECU200 determines whether temperature Toil of the operating oil is lower than third temperature Toil (3) or not. Where temperature Toil of the operating oil is lower than third temperature Toil (3) (YES in S110), the process proceeds to S 112. If not so (NO in S 110), the process proceeds to S 118.

In S 112, ECU200 controls first adjusting valve 56 so that first adjusting valve 56 is in the open position. Where first adjusting valve 56 is in the open position, ECU200 controls first adjusting valve 56 to maintain its open position.

In S114, ECU200 controls second adjusting valve 58 so that the amount of opening of second adjusting valve 58 becomes an amount of opening of the valve corresponding to temperature Toil of the operating oil. It is noted that the control of second adjusting valve 58 is the same as the control of first adjusting valve 56 described in S106, except that the temperature range of temperature Toil of the operating oil where the amount of opening of the valve is changed from 0% to 100% is in the range from second temperature Toil (2) to third temperature Toil (3). Detailed description thereof will not therefore be repeated.

In S116, ECU200 controls third adjusting valve 60 so that third adjusting valve 60 is in the closed position. It is noted that the order of the processing in S112, the processing in S114, and the processing in S116 is not particularly limited, and the processing in S 112, the processing in S114, and the processing in S116 may be performed in any order, or may be performed simultaneously.

In S118, ECU200 determines whether temperature Toil of the operating oil is lower than fourth temperature Toil (4) or not. Where temperature Toil of the operating oil is lower than fourth temperature Toil (4) (YES in S118), the process proceeds to S120. If not so (NO in S118), the process proceeds to S124.

In S120, ECU200 controls each of first adjusting valve 56 and second adjusting valve 58 so that they are both in the closed position.

In S122, ECU200 controls third adjusting valve 60 so that the amount of opening of third adjusting valve 60 becomes an amount of opening of the valve corresponding to temperature Toil of the operating oil. It is noted that the control of third adjusting valve 60 is the same as the control of first adjusting valve 56 described in S106, except that the temperature range of temperature Toil of the operating oil where the amount of opening of the valve is changed from 0% to 100% is in the range from third temperature Toil (3) to fourth temperature Toil (4). Detailed description thereof will not therefore be repeated. The order of the processing in S120 and the processing in S 122 is not particularly limited, and the processing in S 120 and the processing in S122 may be performed in the opposite order, or may be performed in parallel.

In S124, ECU200 controls each of first adjusting valve 56, second adjusting valve 58, and third adjusting valve 60 so that they are all in the open position.

Operation of ECU200 mounted on vehicle 1 according to the present embodiment based on the structure as described above and the flowchart will now be described.

Where temperature Toil of the operating oil is lower than first temperature Toil (1) (YES in S100), first adjusting valve 56, second adjusting valve 58, and third adjusting valve 60 are all controlled to be in the closed position (S102).

On the other hand, where temperature Toil of the operating oil is not lower than first temperature Toil (1) (NO in S100) and lower than second temperature Toil (2) (YES in S104), first adjusting valve 56 is controlled so that the amount of opening of first adjusting valve 56 becomes an amount of opening of the valve corresponding to temperature Toil of the operating oil (S106). Second adjusting valve 58 and third adjusting valve 60 are both controlled to be in the closed position (S108)

Moreover, where temperature Toil of the operating oil is not lower than second temperature Toil (2) (NO in S104) and lower than third temperature Toil (3) (YES in S110), first adjusting valve 56 is controlled to be in the open position (S112). Second adjusting valve 58 is controlled so that the amount of opening of the valve becomes an amount of opening of the valve corresponding to temperature Toil of the operating oil (S114). Third adjusting valve 60 is controlled to be in the closed position (S116).

Where temperature Toil of the operating oil is not lower than third temperature Toil (3) (NO in S110) and lower than fourth temperature Toil (4) (YES in S118), first adjusting valve 56 and second adjusting valve 58 are both controlled to be in the open position (S120). Third adjusting valve 60 is controlled so that the amount of opening of the valve becomes an amount of opening of the valve corresponding to temperature Toil of the operating oil (S122).

Where temperature Toil of the operating oil is not lower than fourth temperature Toil (4) (NO in S118), first adjusting valve 56, second adjusting valve 58, and third adjusting valve 60 are all controlled to be in the open position (S124).

It is noted that the state of flow of the operating oil in accordance with the amount of opening of each of first adjusting valve 56, second adjusting valve 58, and third adjusting valve 60 in the present embodiment is the same as that described in the first embodiment. Detailed description thereof will not therefore be repeated.

As described above, with the vehicle according to the present embodiment, functions and effects similar to those of the vehicle described in the foregoing first embodiment can be achieved. Accordingly, a vehicle can be provided in which the temperature of a refrigerant to be supplied to the rotating electric machine for driving mounted on the vehicle is adjusted to an appropriate temperature.

In the present embodiment, it is described that the amount of opening of first adjusting valve 56 changes from 0% to 100% when in the third-temperature range; however, the present invention is not particularly limited thereto.

For example, first adjusting valve 56 may be an electromagnetic valve that is changed to either one of the open position and the closed position, and duty control may be carried out so that a duty ratio changes between 0% to 100% when in the second-temperature range. Similarly with second adjusting valve 58, duty control may be carried out so that the duty ratio changes between 0% to 100% when in the third-temperature range. Also similarly with third adjusting valve 60, duty control may be carried out so that the duty ratio changes between 0% to 100% when in the fourth-temperature range.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1: vehicle; 2: wheel; 8: reduction gear; 10: transmission; 12: resolver; 16: drive shaft; 18: oil pan; 20: electrically driven pump; 22: wheel speed sensor; 24: PCU; 26: battery; 30, 40: pipe; 50: heater core; 52: inlet portion; 54 inlet tank portion; 56, 58, 60, 62: adjusting valve; 64: outlet portion; 66: outlet tank portion; 70: core portion; 72: tube; 74: radiator fin; 80: wind direction-adjusting valve; 84, 86, 88, 90: valve body; 90, 92, 94, 96: region; 100: temperature sensor; 156: battery temperature sensor; 158: current sensor; 160: voltage sensor; 200: ECU.

## Claims

1. A vehicle comprising:
a rotating electric machine for driving (14); and
a heater core (50) for adjusting a temperature in a vehicle compartment by using a refrigerant supplied to said rotating electric machine for driving (14),
said heater core (50) including:
a first medium passage (90) connecting between an inlet portion (52) and an outlet portion (64) of said heater core (50);
a second medium passage (92) provided in parallel with said first medium passage (90), and connecting between said inlet portion (52) and said outlet portion (64) of said heater core (50); and
a first adjusting valve (56) for shutting off, where a refrigerant temperature is lower than a first-temperature range, flow of said refrigerant in said second medium passage (92) by being changed to a closed position, and for adjusting an amount of flow of said refrigerant in said second medium passage (92) in accordance with said refrigerant temperature where said refrigerant temperature is within said first-temperature range.

2. The vehicle according to claim 1, wherein
said first adjusting valve (56) permits the flow of said refrigerant in said second medium passage (92) by being changed to an open position where said refrigerant temperature is above said first-temperature range.

3. The vehicle according to claim 1, wherein
said heater core (50) further includes:
a third medium passage (94) provided in parallel with each of said first medium passage (90) and said second medium passage (92), and connecting between said inlet portion (52) and said outlet portion (64) of said heater core (50); and
a second adjusting valve (58) for shutting off, where said refrigerant temperature is lower than a second-temperature range, flow of said refrigerant in said third medium passage (94) by being changed to said closed position, and for adjusting an amount of flow of said refrigerant in said third medium passage (94) in accordance with said refrigerant temperature where said refrigerant temperature is within said second-temperature range, and
an upper limit value of said second-temperature range is in a range higher than an upper limit value of said first-temperature range.

4. The vehicle according to claim 1, wherein
said heater core (50) further includes a third adjusting valve (68) that adjusts the amount of flow of said refrigerant in said first medium passage (90) in accordance with said refrigerant temperature where said refrigerant temperature is within said third-temperature range, and permits the flow of said refrigerant in said first medium passage (90) by being changed to the open position where said refrigerant temperature is above said third-temperature range, and
a lower limit value of said third-temperature range is in a range lower in temperature than a lower limit value of said first-temperature range.

5. The vehicle according to any of claims 1 to 4, wherein
said vehicle (1) further includes:
a detecting unit (100) for detecting said refrigerant temperature flowing in said inlet portion (52) of said heater core (50); and
a control unit (200) for controlling said first adjusting valve (56) so that an amount of opening of said first adjusting valve (56) increases as said refrigerant temperature detected by said detecting unit (100) increases.
